# EUROPEAN PATENT APPLICATION

(11) **EP 4 651 409 A1**
(43) Date of publication of application: **19.11.2025**
(21) Application number: 24749638.3
(22) Date of filing: 27.01.2024
(51) Int. Cl.: H04L 1/00

(54) **METHOD FOR COMPENSATING FOR CLOCK FREQUENCY DEVIATION BETWEEN TWO ENDS OF LINK, AND COMMUNICATION PORT**

(30) Priority: 03.02.2023 CN 202310125979
(71) Applicant: Huawei Technologies Co., Ltd., Shenzhen, Guangdong 518129 (CN)
(72) Inventor: LUO, Junping, Shenzhen, Guangdong 518129 (CN); PAN, Wei, Shenzhen, Guangdong 518129 (CN); NIE, Er, Shenzhen, Guangdong 518129 (CN)
(74) Representative: Pfenning, Meinig & Partner mbB
(86) International application number: PCT/CN2024/074344
(87) International publication number: WO 2024/160157

(57) **Abstract**

This application discloses a method for compensating for a clock frequency deviation between two ends of a link, and a communication port. The method may be applied to a first port. The first port detects a quantity of protocol-aware signal extenders in a link between the first port and a second port, and generates a padding packet based on the quantity of protocol-aware signal extenders in the link. Then, the first port inserts the padding packet into a data stream to be sent to the second port. According to the method, a bandwidth loss of the link between the first port and the second port can be reduced.

## Description

This application claims priority to Chinese Patent Application No. 202310125979.4, filed with the China National Intellectual Property Administration on February 3, 2023 and entitled "METHOD FOR COMPENSATING FOR CLOCK FREQUENCY DEVIATION BETWEEN TWO ENDS OF LINK, AND COMMUNICATION PORT", which is incorporated herein by reference in its entirety.

### TECHNICAL FIELD

This application relates to the field of communication technologies, and in particular, to a method for compensating for a clock frequency deviation between two ends of a link, and a communication port.

### BACKGROUND

When a high-speed serial bus link works, if a clock frequency deviation exists between two ends of the link, a data loss may be caused or an underflow (that is, underrun) of a buffer at a receive end of the link may be caused. Therefore, a transmit end may periodically insert a padding packet (for example, a padding code word) with a fixed length into a data stream to be sent to the receive end. Correspondingly, the receive end compensates for the clock frequency deviation between the receive end and the transmit end based on the padding packet in the data stream. However, the insertion of the padding packet increases overheads of a link bandwidth, and a longer length of the padding packet indicates a greater loss of the link bandwidth.

### SUMMARY

This application provides a method for compensating for a clock frequency deviation between two ends of a link, and a communication port, to reduce a loss of a link bandwidth.

According to a first aspect, this application provides a method for compensating for a clock frequency deviation between two ends of a link. The method may be applied to a first port. The first port detects a quantity of protocol-aware signal extenders in a link between the first port and a second port, and generates a padding packet based on the quantity of protocol-aware signal extenders in the link, where the padding packet is used for compensating for a clock frequency deviation between the first port and the second port. Then, the first port inserts the padding packet into a data stream to be sent to the second port.

In a possible implementation of the first aspect, the padding packet includes at least one padding unit. That the first port generates the padding packet based on the quantity of protocol-aware signal extenders in the link includes: The first port determines a quantity of padding units in the padding packet based on the quantity of protocol-aware signal extenders in the link. Then, the first port generates a corresponding padding packet based on the quantity of padding units.

In the foregoing implementation, a smaller quantity of protocol-aware signal extenders in the link indicates a smaller quantity that is of padding units in the padding packet and that is set by the first port. Correspondingly, a length of the padding packet is shorter. However, in a conventional technology, regardless of whether a link includes a protocol-aware signal extender and how many protocol-aware signal extenders are included, a length of a padding packet is fixed and is fixed to a length corresponding to a largest quantity of protocol-aware signal extenders included in the link. Therefore, for a link that includes no protocol-aware signal extender or includes a small quantity of protocol-aware signal extenders, a length of a padding packet generated in the foregoing implementation is shorter than the padding packet with the fixed length. Therefore, when data transmission is performed through the link, a loss of a link bandwidth can be reduced, and utilization of the link bandwidth can be improved.

In a possible implementation of the first aspect, the quantity of padding units in the padding packet is greater than the quantity of protocol-aware signal extenders in the link.

In a possible implementation of the first aspect, a larger quantity of protocol-aware signal extenders in the link indicates a larger quantity of padding units in the padding packet.

In a possible implementation of the first aspect, when the link includes no protocol-aware signal extender, the quantity of padding units in the padding packet is x. Each time one protocol-aware signal extender is added to the link, the quantity of padding units in the padding packet is increased by y. Both x and y are positive integers.

In a possible implementation of the first aspect, when the link includes no protocol-aware signal extender, the padding packet includes one padding unit. When the link includes one protocol-aware signal extender, the padding packet includes two padding units. When the link includes two protocol-aware signal extenders, the padding packet includes three padding units.

It should be understood that during actual application, after the first port sends the padding packet, the padding packet first arrives at the protocol-aware signal extender in the link, and then arrives at the second port. In addition, after receiving the padding packet, both the protocol-aware signal extender in the link and the second port may delete the padding unit in the padding packet. In the foregoing implementation, it can be ensured that after the padding packet arrives at the second port, if the second port determines that a clock frequency of the first port is greater than a clock frequency of the second port, the padding packet still includes a padding unit that can be deleted by the second port.

In a possible implementation of the first aspect, the first port is a port on a first chip, and the second port is a port on a second chip.

The first chip may be located on one or more devices of a server, a terminal device, an embedded device, or a communication device. The second chip may be welded on a main board of a device on which the first chip is located, or a board on which the second chip is located is inserted into the device on which the first chip is located.

It should be understood that the server, the terminal device, the embedded device, or the communication device may include a high-speed serial bus link, and the high-speed serial bus link in each of these devices generally includes no protocol-aware signal extender or includes only one protocol-aware signal extender. Therefore, when the technical solution provided in this application is used to compensate for a clock frequency deviation between two ends of the high-speed serial bus link, a bandwidth loss of the link can be reduced.

In a possible implementation of the first aspect, in addition to the padding unit, the padding packet further includes one or both of an end field or a control field.

In a possible implementation of the first aspect, the first port and the second port use a same clock source, or the first port and the second port use different clock sources. In other words, a clock frequency deviation exists between the first port and the second port.

In a possible implementation of the first aspect, the link between the first port and the second port is a high-speed serial bus link, for example, a peripheral component interconnect express (peripheral component interconnect express, PCIe) link or a compute express link (compute express link, CXL) link. In this case, the padding packet may be a first padding code word (SKP order set, SKP OS) or a second padding code word. Both the first padding code word and the second padding code word include a padding field, and the padding field includes one or more bodies. Correspondingly, the padding unit in the padding packet is a body in the first padding code word or the second padding code word.

According to a second aspect, this application provides a first port. The first port includes a detecting module, a packet generation module, and a sending module. The detecting module is configured to detect a quantity of protocol-aware signal extenders in a link between the first port and a second port. The packet generation module is configured to generate a padding packet based on the quantity of protocol-aware signal extenders in the link, where the padding packet is used for compensating for a clock frequency deviation between the first port and the second port. The sending module is configured to insert the padding packet into a data stream to be sent to the second port.

In a possible implementation of the second aspect, the padding packet includes at least one padding unit. The packet generation module is configured to determine a quantity of padding units in the padding packet based on the quantity of protocol-aware signal extenders in the link, and generate a corresponding padding packet based on the quantity of padding units.

In a possible implementation of the second aspect, the quantity of padding units in the padding packet is greater than the quantity of protocol-aware signal extenders in the link.

In a possible implementation of the second aspect, a larger quantity of protocol-aware signal extenders in the link indicates a larger quantity of padding units in the padding packet.

In a possible implementation of the second aspect, when the link includes no protocol-aware signal extender, the quantity of padding units in the padding packet is x. Each time one protocol-aware signal extender is added to the link, the quantity of padding units in the padding packet is increased by y. Both x and y are positive integers.

In a possible implementation of the second aspect, when the link includes no protocol-aware signal extender, the padding packet includes one padding unit. When the link includes one protocol-aware signal extender, the padding packet includes two padding units. When the link includes two protocol-aware signal extenders, the padding packet includes three padding units.

In a possible implementation of the second aspect, the first port is a port on a first chip, and the second port is a port on a second chip.

The first chip may be located on one or more devices of a server, a terminal device, an embedded device, or a communication device. The second chip may be welded on a main board of a device on which the first chip is located, or a board on which the second chip is located is inserted into the device on which the first chip is located.

In a possible implementation of the second aspect, in addition to the padding unit, the padding packet further includes one or both of an end field or a control field.

In a possible implementation of the second aspect, the first port and the second port use a same clock source, or the first port and the second port use different clock sources.

In a possible implementation of the second aspect, the link between the first port and the second port is a high-speed serial bus link, for example, a PCIe link or a CXL link. In this case, the padding packet may be a first padding code word or a second padding code word. Both the first padding code word and the second padding code word include a padding field, and the padding field includes one or more bodies. Correspondingly, the padding unit in the padding packet is a body in the first padding code word or the second padding code word.

According to a third aspect, this application provides an electronic device. The electronic device includes a communication port, where the communication port performs a part or all of the method described in any one of the first aspect and the implementations of the first aspect.

According to a fourth aspect, this application provides a communication system. The communication system includes a first port, a second port, and a link between the first port and the second port, and the first port performs a part or all of the method described in any one of the first aspect and the implementations of the first aspect.

According to a fifth aspect, this application provides a computer-readable storage medium. The computer storage medium stores computer program code. When the computer program code is executed by a computing device, the computing device performs a part or all of the method described in any one of the first aspect and the implementations of the first aspect.

According to a sixth aspect, this application provides a computer program product. The computer program product may be software or a program product that includes instructions and that can run on a computing device or can be stored in any usable medium. When the computer program product runs on at least one computing device, the at least one computing device is enabled to perform a part or all of the method described in any one of the first aspect and the implementations of the first aspect.

### BRIEF DESCRIPTION OF DRAWINGS

FIG. 1 is a diagram of an application scenario according to an embodiment of this application;
FIG. 2 is a schematic flowchart of a method for compensating for a clock frequency deviation between two ends of a link according to an embodiment of this application;
FIG. 3 is a diagram of a structure of a padding packet according to an embodiment of this application;
FIG. 4 is a diagram of a structure of another padding packet according to an embodiment of this application;
FIG. 5 is a diagram of an application scenario according to an embodiment of this application;
FIG. 6 is a diagram of another application scenario according to an embodiment of this application;
FIG. 7 is a diagram of still another application scenario according to an embodiment of this application;
FIG. 8 is a diagram of a structure of a first port according to an embodiment of this application; and
FIG. 9 is a diagram of a structure of an electronic device according to an embodiment of this application.

### DESCRIPTION OF EMBODIMENTS

In a serial communication scenario, both two ends (that is, a transmit end and a receive end) of a link need to be driven by a clock to complete data transmission. The two ends of the link may use different clock sources, or may use a same clock source. When the two ends of the link use different clock sources, a clock frequency deviation exists between the two ends of the link. When the two ends of the link use the same clock source, theoretically, no clock frequency deviation exists between the two ends of the link. However, due to production factors (for example, different crystal oscillators) or human factors, the clock frequency deviation may also exist between the two ends of the link that use the same clock source.

In addition, for a high-speed serial bus link (for example, a PCIe link or a CXL link), a high-speed signal whose transmission is performed on the high-speed serial bus link may generate a large amount of electromagnetic radiation, which interferes with another adjacent signal, and reduces reliability of a signal of an electronic system. Therefore, spread spectrum clocking (spread spectrum clocking, SSC) may be used to modulate clocks at two ends of the high-speed serial bus link, to disperse an emission spectrum of the high-speed signal and mitigate impact caused by electromagnetic interference. However, this also increases a clock frequency deviation between the two ends of the link.

The clock frequency deviation between the two ends of the link may cause a data loss or cause an underflow (that is, underrun) of a buffer at the receive end of the link. For example, when a clock frequency of the transmit end is greater than a clock frequency of the receive end, an elastic buffer at the receive end may overflow, causing a loss of some data. When the clock frequency of the transmit end is less than the clock frequency of the receive end, the buffer at the receive end may be in an idle state, causing an underflow of the buffer at the receive end. Therefore, how to compensate for the clock frequency deviation between the two ends of the link is a problem.

For this problem, an embodiment of this application provides a method for compensating for a clock frequency deviation between two ends of a link. In this method, a transmit end corresponding to a link determines a quantity of padding units in a padding packet based on a quantity of protocol-aware signal extenders in the link, to generate a corresponding padding packet. Then, the transmit end periodically inserts the padding packet into a data stream to be sent to a receive end, so that a clock frequency deviation between the transmit end and the receive end can be compensated for. In the method provided in this embodiment of this application, a smaller quantity of protocol-aware signal extenders in the link indicates a smaller quantity that is of padding units in the padding packet and that is set by the transmit end. Correspondingly, a length of the padding packet is shorter. Therefore, for a link that includes no protocol-aware signal extender or includes a small quantity of protocol-aware signal extenders (for example, includes only one protocol-aware signal extender), a length of a padding packet generated by using the method provided in this embodiment of this application is shorter than a length of a padding packet with a fixed length in a conventional technology. Therefore, when data transmission is performed through the link, a loss of a link bandwidth can be reduced, and utilization of the link bandwidth can be improved.

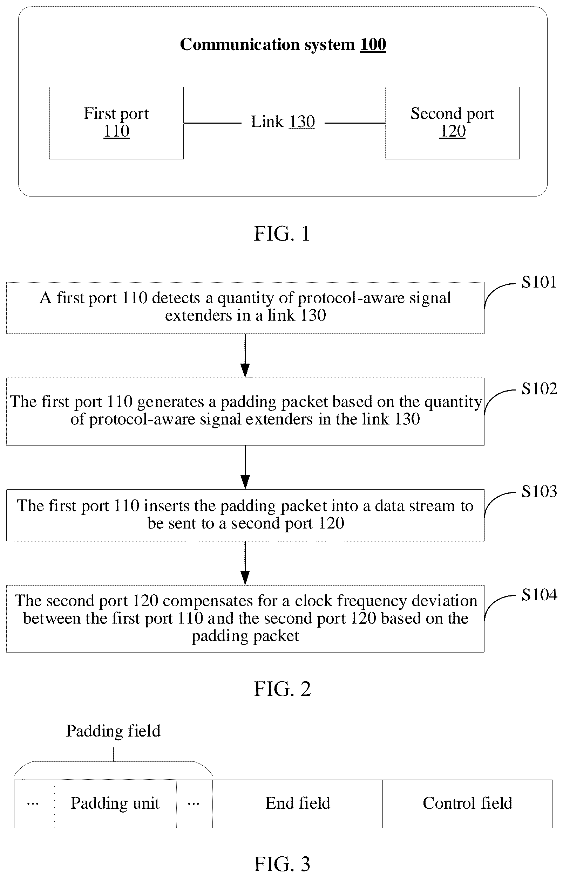

With reference to FIG. 1, the following describes an application scenario to which the method provided in this embodiment of this application is applicable.

As shown in FIG. 1, a communication system 100 includes a first port 110, a second port 120, and a link 130 between the first port 110 and the second port 120.

The first port 110 is a port on a first chip, and the second port 120 is a port on a second chip. The first chip may be located on one or more devices of a server, a terminal device, an embedded device, or a communication device. The second chip may be welded on a main board of a device on which the first chip is located, or a board on which the second chip is located is inserted into the device on which the first chip is located. The board on which the second chip is located includes, for example, a PCIE card, a switch card, a solid-state drive (solid-state drive, SSD) card, a network interface card, a board configured to connect the network interface card and a main board of a server to enhance a signal, or the like.

The link 130 is a high-speed serial bus link, for example, a PCIe link or a CXL link. The first port 110 communicates with the second port 120 through the link 130. To be specific, the first port 110 may send a data stream to the second port 120 through the link 130, and the second port 120 may also send a data stream to the first port 110 through the link 130.

In some embodiments, a high-speed signal sent by a chip generally can travel only for a very short distance on a printed circuit board (printed circuit board, PCB) due to fast attenuation of the high-speed signal. Therefore, for a long-distance channel (for example, a channel between a central processing unit (central processing unit, CPU) on a server and a board inserted into the server), one or more protocol-aware signal extenders (for example, a protocol-aware retimer in the PCIe link) may be inserted into a link between two communication ends, to help extend routing of the high-speed signal. Therefore, the link 130 may include one or more protocol-aware signal extenders. In some other embodiments, the link 130 may include no protocol-aware signal extender.

In some embodiments, the first port 110 and the second port 120 use a same clock source, or the first port 110 and the second port 120 use different clock sources. Further, when the first port 110 and the second port 120 use different clock sources, the first port 110 and the second port 120 may further enable SSC. It can be learned from the foregoing descriptions that, regardless of whether the first port 110 and the second port 120 use the same clock source, a clock frequency deviation may exist between the first port 110 and the second port 120. In this case, the clock frequency deviation between the first port 110 and the second port 120 needs to be compensated for.

For ease of description, the following uses an example in which a first port 110 sends a data stream to a second port 120 to describe in detail, with reference to FIG. 2, a method for adjusting a clock frequency deviation between two ends of a link (that is, a link 130 herein) according to an embodiment of this application.

S101: The first port 110 detects a quantity of protocol-aware signal extenders in the link 130.

Specifically, the second port 120 sends a training sequence (training sequence) to the first port 110, and correspondingly, the first port 110 receives the training sequence sent by the second port 120. The training sequence includes a present bit (present bit) of the protocol-aware signal extender, and the present bit indicates the quantity of protocol-aware signal extenders in the link 130. Then, the first port 110 determines the quantity of protocol-aware signal extenders in the link 130 based on the received training sequence. There may be zero, one, or more protocol-aware signal extenders in the link 130.

S102: The first port 110 generates a padding packet based on the quantity of protocol-aware signal extenders in the link 130.

Specifically, the first port 110 determines a quantity of padding units in the padding packet based on the quantity of protocol-aware signal extenders in the link 130, and then generates the padding packet based on the quantity of padding units in the padding packet.

The padding packet is used for compensating for a clock frequency deviation between the first port 110 and the second port 120. Specifically, the padding packet may compensate for the clock frequency deviation between the first port 110 and the second port 120, or may compensate for a clock frequency deviation between the first port 110 and the protocol-aware signal extender in the link 130.

The padding packet includes at least one padding unit. Optionally, in addition to the padding unit, the padding packet may further include one or both of an end field or a control field. The padding unit is configured to carry data that is not related to a data payload (payload) between the first port 110 and the second port 120. The end field is used for identifying an end of the padding unit. The control field has a control function, for example, implementing bandwidth switching of the link 130.

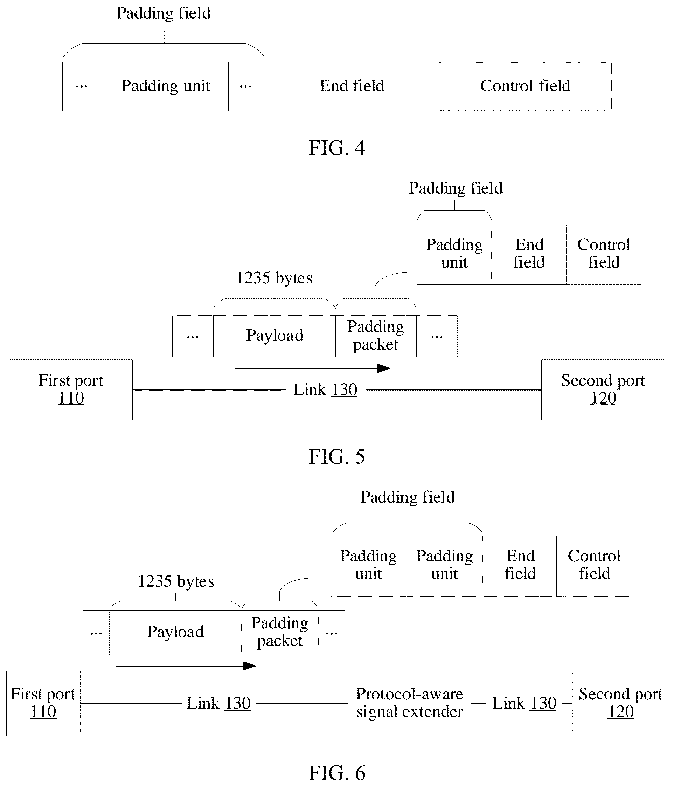

In some embodiments, the padding packet may be a first padding code word. As shown in FIG. 3, the first padding code word includes a padding field, an end field, and a control field. The padding field includes one or more bodies, and the body is the padding unit. Correspondingly, the end field is used for identifying an end of the padding field. In some other embodiments, the padding packet may alternatively be a second padding code word. As shown in FIG. 4, the second padding code word includes a padding field and an end field. Optionally, the second padding code word further includes a control field. Similar to the padding field in the first padding code word, the padding field in the second padding code word also includes one or more bodies. In addition to identifying an end of the padding field, the end field in the second padding code word further indicates whether the second padding code word includes the control field. For example, an end field corresponding to the second padding code word that includes the control field is different from an end field corresponding to the second padding code word that includes no control field. Similar to the control field in the first padding code word, the control field in the second padding code word also has a control function. During actual application, when the control function is required, the second padding code word includes the control field, and when the control function is not required, the second padding code word includes no control field.

When the link 130 includes the protocol-aware signal extender, the padding packet sent by the first port 110 first arrives at the protocol-aware signal extender in the link 130. After receiving the padding packet, the protocol-aware signal extender in the link 130 may add or delete the padding unit in the padding packet based on a buffer status of a local elastic buffer (that is, the clock frequency deviation between the first port 110 and the protocol-aware signal extender in the link 130), to ensure that the elastic buffer does not overflow or underrun. In addition, the protocol-aware signal extender in the link may not add or delete the padding unit in the padding packet. After passing through the protocol-aware signal extender, the padding packet arrives at the second port 120. After receiving the padding packet, the second port 120 adds or deletes the padding unit in the padding packet, to compensate for the clock frequency deviation between the first port 110 and the second port 120. It can be learned that, in this process, both the protocol-aware signal extender in the link 130 and the second port 120 may delete the padding unit in the padding packet. Therefore, in this embodiment of this application, the quantity of padding units in the padding packet generated by the first port 110 should be greater than the quantity of protocol-aware signal extenders in the link 130. In this way, it can be ensured that after the padding packet arrives at the second port 120, the padding packet still includes a padding unit that can be deleted by the second port 120.

In some embodiments, a larger quantity of protocol-aware signal extenders in the link 130 indicates a larger quantity of padding units in the padding packet generated by the first port 110.

Further, when the link includes no protocol-aware signal extender, the quantity of padding units in the padding packet generated by the first port 110 is x. Each time one protocol-aware signal extender is added to the link, the quantity of padding units in the padding packet generated by the first port 110 is increased by y. Both x and y are positive integers.

Optionally, x and y may be the same. For example, when the link 130 includes no protocol-aware signal extender, the padding packet generated by the first port 110 includes one padding unit. When the link 130 includes one protocol-aware signal extender, the padding packet generated by the first port 110 includes two padding units. When the link 130 includes two protocol-aware signal extenders, the padding packet generated by the first port 110 includes three padding units.

Optionally, x and y may be different. For example, when the link 130 includes no protocol-aware signal extender, the padding packet generated by the first port 110 includes one padding unit. When the link 130 includes one protocol-aware signal extender, the padding packet generated by the first port 110 includes three padding units.

In addition, it should be further understood that, during actual application, quantities of padding units that are in the padding packet and that are added or deleted by the protocol-aware signal extender in the link 130 and by the second port 120 may be the same, or may be different. In addition, quantities of padding units that are in the padding packet and that are added or deleted by different protocol-aware signal extenders in the link 130 may be the same, or may be different. A quantity of padding units that are in the padding packet and that are added or deleted by the protocol-aware signal extender in the link 130 may also be the same as or different from a quantity of padding units that are in the padding packet and that are added or deleted by the second port 120.

S103: The first port 110 inserts the padding packet into the data stream to be sent to the second port 120.

Specifically, the first port 110 inserts, at a target frequency, the padding packet into the data stream to be sent to the second port 120. The target frequency may be a preset frequency, or a frequency dynamically adjusted by the first port 110 based on an actual situation (for example, a buffer status of an elastic buffer of the second port 120).

S104: The second port 120 compensates for the clock frequency deviation between the first port 110 and the second port 120 based on the padding packet.

Specifically, the second port 120 receives the padding packet sent by the first port 110, and compensates for the clock frequency deviation between the first port 110 and the second port 120 by deleting or adding the padding unit in the padding packet. For example, for the data stream, when a rate of writing data into the second port 120 is greater than a rate of reading data from the second port 120, the second port 120 performs an addition operation on the padding unit in the padding packet. When a rate of writing data into the second port 120 is less than a rate of reading data from the second port 120, the second port 120 performs a deletion operation on the padding unit in the padding packet.

With reference to several specific embodiments, the following further describes the method for compensating for the clock frequency deviation between the two ends of the link 130.

It should be noted that, a 6th generation protocol (PCIe Gen6) is used for the link 130 in the following several embodiments, and SSC is enabled at both ends (that is, the first port 110 and the second port 120) of the link 130. In other words, the target frequency is inserting one padding packet every 1235 bytes (where the 1235 bytes herein are valid bytes, that is, the payload, during communication between the first port 110 and the second port 120).

Example 1: The link 130 includes no protocol-aware signal extender.

As shown in FIG. 5, when the link 130 includes no protocol-aware signal extender, the first port 110 may set the quantity of padding units in the padding packet to 1. It is assumed that the padding packet is the first padding code word. In other words, the padding packet includes the padding field (one padding unit), the end field, and the control field. If the padding unit has 8 bytes, the end field has 8 bytes, and the control field has 8 bytes, a length of the padding packet is 24 bytes (8+8+8=24). In this case, a bandwidth loss of the link 130 is 1.91% (24/(24+1235)*100%).

Example 2: The link 130 includes one protocol-aware signal extender.

As shown in FIG. 6, when the link 130 includes one protocol-aware signal extender, the first port 110 may set the quantity of padding units in the padding packet to 2. It is assumed that the padding packet is the first padding code word. In other words, the padding packet includes the padding field (two padding units), the end field, and the control field. If one padding unit has 8 bytes, the end field has 8 bytes, and the control field has 8 bytes, a length of the padding packet is 32 bytes (2*8+8+8=32). In this case, a bandwidth loss of the link 130 is 2.53% (32/(32+1235)*100%).

Example 3: The link 130 includes two protocol-aware signal extenders.

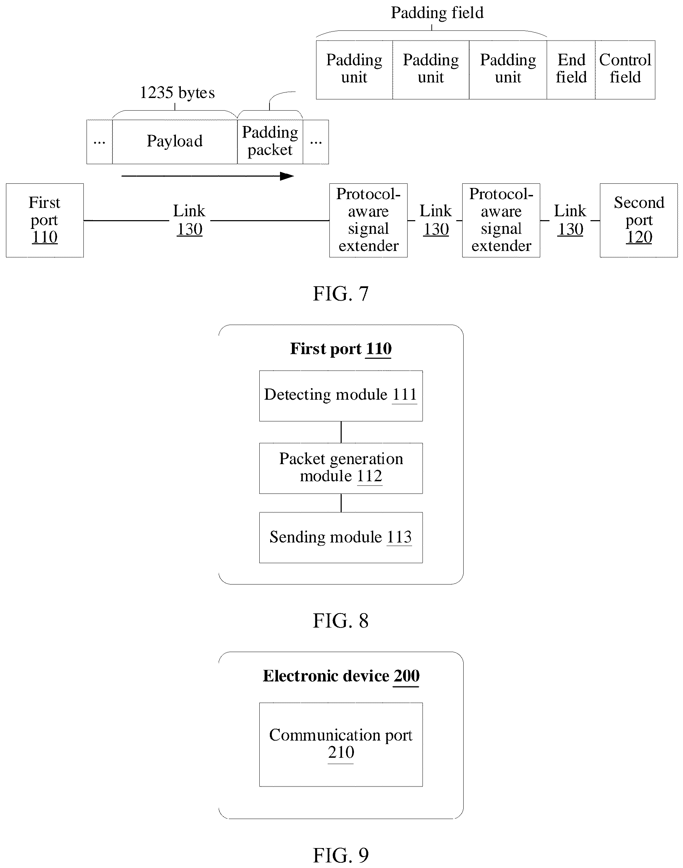

As shown in FIG. 7, when the link 130 includes two protocol-aware signal extenders, the first port 110 may set the quantity of padding units in the padding packet to 3. It is assumed that the padding packet is the first padding code word. In other words, the padding packet includes the padding field (three padding units), the end field, and the control field. If one padding unit has 8 bytes, the end field has 8 bytes, and the control field has 8 bytes, a length of the padding packet is 40 bytes (3*8+8+8=40). In this case, a bandwidth loss of the link 130 is 3.14% (40/(40+1235)*100%).

It should be understood that, when the target frequency is inserting one padding packet every 1235 bytes, if the solution in the conventional technology is used, regardless of whether the link 130 includes the protocol-aware signal extender and how many protocol-aware signal extenders are included, the length of the padding code word is fixed to 40 bytes (to be specific, the padding packet includes the three padding units (3*8=24 bytes in total), the end field (8 bytes), and the control field (8 bytes)). Accordingly, the bandwidth loss of the link 130 is 3.14% regardless of whether the link 130 includes the protocol-aware signal extender and how many protocol-aware signal extenders are included. However, according to the method provided in this embodiment of this application, except that the bandwidth loss of the link 130 remains the same when the link 130 includes two protocol-aware signal extenders, both the bandwidth losses of the link 130 are less than 3.14% when the link 130 includes no protocol-aware signal extender and when the link 130 includes only one protocol-aware signal extender. In other words, when the method provided in this embodiment of this application is used to compensate for the clock frequency deviation between the two ends of the link 130, the bandwidth loss of the link 130 can be reduced.

It should be further understood that the foregoing three embodiments merely correspond to several cases that may occur during actual application. In other words, there may be another case during actual application. For example, the link 130 includes three or more protocol-aware signal extenders, or the padding packet is the second padding code word. However, in general, in comparison with the conventional technology, when the method provided in this embodiment of this application is used to compensate for the clock frequency deviation between the two ends of the link 130, the bandwidth loss of the link 130 can be reduced.

In addition, it should be noted that, for a server, most high-speed serial bus links inside the server include no protocol-aware signal extender, and a small quantity of high-speed serial bus links each include one protocol-aware signal extender. Therefore, when the link 130 is the high-speed serial bus link inside the server (for example, the first port 110 is a port on a processor in the server, and the second port 120 is a port on a board inserted into the server), the link 130 generally includes no protocol-aware signal extender or includes only one protocol-aware signal extender. In this case, when the method provided in this embodiment of this application is used to compensate for the clock frequency deviation between the two ends of the link 130, the bandwidth loss of the link 130 can be reduced. Similarly, for another terminal device, embedded device, or communication device that internally includes a high-speed serial bus link, when the technical solution provided in this application is used to compensate for a clock frequency deviation between two ends of the link, a bandwidth loss of the link can also be reduced.

The foregoing describes in detail, with reference to FIG. 2 to FIG. 7, the method for compensating for the clock frequency deviation between the two ends of the link according to an embodiment of this application. The following describes, with reference to FIG. 8, a structure of a first port 110 configured to perform the foregoing method.

FIG. 8 is a diagram of an example structure of the first port 110. As shown in FIG. 8, the first port 110 includes a detecting module 111, a packet generation module 112, and a sending module 113. The detecting module 111, the packet generation module 112, and the sending module 113 work together to implement a function of the first port 110 in the foregoing method embodiment. Specifically, the detecting module 111 is configured to perform S101, the packet generation module 112 is configured to perform S102, and the sending module 113 is configured to perform S103.

In this embodiment of this application, all of the detecting module 111, the packet generation module 112, and the sending module 113 may be implemented by using software, or may be implemented by using hardware, or may be implemented by using a combination of the software and the hardware.

It should be understood that the diagram of the structure shown in FIG. 8 is merely an example of a structure division manner of dividing the first port 110 based on functions. A specific structure division manner of the first port 110 is not limited in embodiments of this application. For example, the detecting module 111 may be configured to perform any step in S101 to S103, the packet generation module 112 may be configured to perform any step in S101 to S103, and the sending module 113 may be configured to perform any step in S101 to S103. Steps implemented by the detecting module 111, the packet generation module 112, and the sending module 113 may be formulated based on an actual requirement. The detecting module 111, the packet generation module 112, and the sending module 113 respectively implement different steps in the foregoing method (including S101 to S103) for compensating for the clock frequency deviation between the two ends of the link 130, to implement all functions of the first port 110 in the foregoing method embodiment.

An embodiment of this application further provides an electronic device. FIG. 9 is a diagram of an example structure of the electronic device. As shown in FIG. 9, the electronic device 200 includes a communication port 210. The communication port 210 and a first port 110 belong to a same concept and may perform S101 to S103, to implement serial communication between the communication port 210 and another port (for example, a second port 120).

Optionally, the electronic device 200 further includes a memory. The memory may include a read-only memory (read-only memory, ROM) or another type of static storage device that can store static information and instructions, or may include a random-access memory (random-access memory, RAM) or another type of dynamic storage device that can store information and instructions, or may include an electrically erasable programmable read-only memory (electrically erasable programmable read-only memory, EEPROM), a read-only disk (compact disc read-only memory, CD-ROM) or another optical disc storage, an optical disc storage (including a compact disc, a laser disc, an optical disc, a digital versatile disc, a Blu-ray disc, and the like), a magnetic disk storage medium or another magnetic storage device (including a hard disk drive (hard disk drive, HDD) or a solid-state drive (solid-state drive, SSD)), or any other medium that can be used to carry or store expected program code in a form of an instruction or a data structure and that can be accessed by a computer, but is not limited thereto.

The memory stores executable program code, for example, program code of a detecting module 111, program code of a packet generation module 112, and program code of a sending module 113. The communication port 210 executes the executable program code to separately implement functions of the detecting module 111, the packet generation module 112, and the sending module 113, to implement the foregoing described method (including S101 to S103) for compensating for the clock frequency deviation between the two ends of the link. In other words, the memory stores instructions used for performing the foregoing described method for compensating for the clock frequency deviation between the two ends of the link.

Optionally, the electronic device 200 further includes a processor. The processor may include a CPU, a graphics processing unit (graphics processing unit, GPU), a microprocessor (microprocessor, MP), a digital signal processor (digital signal processor, DSP), an integrated circuit such as an application-specific integrated circuit (application-specific integrated circuit, ASIC), a programmable logic device (programmable logic device, PLD), or a combination thereof. The PLD may be a complex programmable logic device (complex programmable logic device, CPLD), a field programmable gate array (field programmable gate array, FPGA), a generic array logic (Generic Array Logic, GAL), or any combination thereof. In some embodiments, the communication port 210 may be a port on the processor.

An embodiment of this application further provides a computer-readable storage medium. The computer-readable storage medium may be any usable medium that can be stored by a computing device or a data storage device such as a data center that includes one or more usable media. The usable medium may be a magnetic medium (for example, a floppy disk, a hard disk, or a magnetic tape), an optical medium (for example, a DVD), a semiconductor medium (for example, an SSD), or the like. The computer-readable storage medium includes computer program code, and the computer program code indicates the computing device to perform the foregoing described method for compensating for the clock frequency deviation between the two ends of the link.

An embodiment of this application further provides a computer program product including instructions. The computer program product may be software or a program product that includes instructions and that can run on a computing device or can be stored in any usable medium. When the computer program product runs on at least one computing device, the at least one computing device is enabled to perform the foregoing described method for compensating for the clock frequency deviation between the two ends of the link.

Finally, it should be noted that the foregoing embodiments are merely intended for describing the technical solutions of this application, but not for limiting this application. Although this application is described in detail with reference to the foregoing embodiments, a person of ordinary skill in the art should understand that modifications may still be made to the technical solutions described in the foregoing embodiments or equivalent replacements may be made to some technical features thereof, without departing from the protection scope of the technical solutions in embodiments of this application.

## Claims

1. A method for compensating for a clock frequency deviation between two ends of a link, comprising:
detecting, by a first port, a quantity of protocol-aware signal extenders in a link between the first port and a second port;
generating, by the first port, a padding packet based on the quantity of signal extenders in the link, wherein the padding packet is used for compensating for a clock frequency deviation between the first port and the second port; and
inserting, by the first port, the padding packet into a data stream to be sent to the second port.

2. The method according to claim 1, wherein the padding packet comprises at least one padding unit, and generating, by the first port, the padding packet based on the quantity of signal extenders in the link comprises:
determining, by the first port, a quantity of padding units in the padding packet based on the quantity of signal extenders in the link; and
generating, by the first port, the padding packet based on the quantity of padding units.

3. The method according to claim 2, wherein the quantity of padding units in the padding packet is greater than the quantity of signal extenders in the link.

4. The method according to claim 3, wherein a larger quantity of signal extenders in the link indicates a larger quantity of padding units in the padding packet.

5. The method according to claim 4, wherein
when the link comprises no signal extender, the quantity of padding units in the padding packet is x; and
each time one signal extender is added to the link, the quantity of padding units in the padding packet is increased by y, wherein
both x and y are positive integers.

6. The method according to any one of claims 1 to 5, wherein the first port is a port on a first chip, and the second port is a port on a second chip.

7. The method according to any one of claims 1 to 6, wherein the padding packet comprises one or both of an end field or a control field.

8. The method according to any one of claims 1 to 7, wherein the first port and the second port use a same clock source, or the first port and the second port use different clock sources.

9. A first port, comprising:
a detecting module, configured to detect a quantity of protocol-aware signal extenders in a link between the first port and a second port;
a packet generation module, configured to generate a padding packet based on the quantity of signal extenders in the link, wherein the padding packet is used for compensating for a clock frequency deviation between the first port and the second port; and
a sending module, configured to insert the padding packet into a data stream to be sent to the second port.

10. The first port according to claim 9, wherein the padding packet comprises at least one padding unit; and
the packet generation module is configured to determine a quantity of padding units in the padding packet based on the quantity of signal extenders in the link, and generate the padding packet based on the quantity of padding units.

11. The first port according to claim 10, wherein the quantity of padding units in the padding packet is greater than the quantity of signal extenders in the link.

12. The first port according to claim 11, wherein a larger quantity of signal extenders in the link indicates a larger quantity of padding units in the padding packet.

13. The first port according to claim 12, wherein
when the link comprises no signal extender, the quantity of padding units in the padding packet is x; and
each time one signal extender is added to the link, the quantity of padding units in the padding packet is increased by y, wherein
x and y are positive integers.

14. The first port according to any one of claims 9 to 13, wherein the first port is a port on a first chip, and the second port is a port on a second chip.

15. The first port according to any one of claims 9 to 14, wherein the padding packet comprises one or both of an end field or a control field.

16. The first port according to any one of claims 9 to 15, wherein the first port and the second port use a same clock source, or the first port and the second port use different clock sources.

17. An electronic device, comprising a communication port, wherein the communication port is configured to perform the method according to any one of claims 1 to 8.

18. A communication system, comprising a first port, a second port, and a link between the first port and the second port, wherein the first port is configured to perform the method according to any one of claims 1 to 8.

19. A computer-readable storage medium, storing computer program code, wherein when the computer program code is executed by a computing device, the computing device performs the method according to any one of claims 1 to 8.
